# EUROPÄISCHE PATENTSCHRIFT

(11) **EP 0 661 149 B1**
(45) Veröffentlichungstag und Bekanntmachung des Hinweises auf die Patenterteilung: **10.11.1999**
(21) Anmeldenummer: 94120319.2
(22) Anmeldetag: 21.12.1994
(51) Int. Cl.: B29D 30/06, B29C 35/08

(54) **Verfahren zur Herstellung von Fahrzeugluftreifen unter Einsatz von Mikrowellenenergie**
Process for manufacturing pneumatic tyres using microwave energy
Procédé de fabrication de bandages pneumatiques utilisant de l'énergie à micro-ondes

(30) Priorität: 04.01.1994 DE 4400092
(43) Veröffentlichungstag der Anmeldung: 05.07.1995
(73) Patentinhaber: Dunlop GmbH, 63450 Hanau (DE)
(72) Erfinder: Unseld, Klaus, Dr., D-63456 Hanau (DE); Gerresheim, Manfred, Dr., D-63179 Obertshausen (DE)
(74) Vertreter: Manitz, Finsterwald & Partner

(56) Entgegenhaltungen:
- EP-A- 0 233 846
- EP-A- 0 571 802
- EP-A- 0 620 130
- FR-A- 2 562 833
- FR-A- 2 669 557
- GB-A- 759 001
- US-A- 4 208 562
- US-A- 4 481 159
- DATABASE WPI Week 9225, Derwent Publications Ltd., London, GB; AN 92-204443 & JP-A-4 133 807 (TOYO RUBBER IND.) 7. Mai 1992

## Beschreibung

Die Erfindung betrifft ein Verfahren zur Herstellung von Fahrzeugluftreifen mit sich zwischen zwei Wulstringen erstreckender Karkasse und einem zwischen Karkasse und Lauffläche angeordneten Gürtel nach dem Oberbegriff von Anspruch 1.

Ein derartiges Verfahren ist aus der GB-A-759 001 bekannt. Bei diesem bekannten verfahren wird die zur Vulkanisation erforderliche Wärmeenergie zwar bereits im wesentlichen durch Mikrowellenenergie eingebracht. Die Mikrowellenenergie wird jedoch in alle Reifenbereiche gleichmäßig eingebracht, wodurch aufgrund der Reifenstruktur unterschiedliche Erwärmungen und lokale Überhitzungen auftreten können. Starke Überhitzungen können insbesondere in Reifenbereichen mit metallischen Bestandteilen auftreten.

Aus der nichtvorveröffentlichten EP-A 0 640 470 ist ein Verfahren der eingangs genannten Art bekannt, bei welchem zusätzlich der jeweilige Reifenrohling unter ausschließlicher Verwendung von nichtmetallischen Bestandteilen aufgebaut wird und bei welchem die Heizform aus bei Mikrowellenbeaufschlagung unterschiedliche Erwärmungseigenschaften aufweisenden Materialien aufgebaut ist, wobei die unterschiedlichen Materialbereiche der Heizform unterschiedlichen Reifenbereichen zugeordnet sind.

Der Erfindung liegt die Aufgabe zugrunde, ein Verfahren der eingangs genannten Art anzugeben, welches eine gleichmäßigere Erwärmung des Reifenrohlings und dadurch eine bessere Vulkanisation ermöglicht. Diese Aufgabe wird durch ein Verfahren gemäß Anspruch 1 gelöst.

Durch die ausschließliche Verwendung von nichtmetallischen Bestandteilen werden durch Metallbestandteile hervorgerufene lokale Überhitzungen vermieden. Zusätzlich können durch das erfindungsgemäße Verfahren einzelne Reifenbereiche gezielt mit einer gewünschten Menge Mikrowellenenergie beaufschlagt werden. Hierdurch wird die Erwärmung des Reifenrohlings vergleichmäßigt und die Vulkanisation insgesamt verbessert.

Es hat sich gezeigt, daß die Verwendung von keramischem Material für eine zumindest zum Teil durch Mikrowellenenergie aufheizbare Heizform besonders vorteilhaft ist, da das keramische Material so gewählt werden kann, daß sich die Heizform bei Mikrowellenbeaufschlagung entweder nicht oder in gewünschter und definierter Weise erwärmt, wobei es insbesondere möglich ist, die Heizform aus unterschiedlichen keramischen Materialien aufzubauen, welche jeweils unterschiedliche Erwärmungseigenschaften besitzen, so daß gezielt die Einbringung von Wärmeenergie in den zu vulkanisierenden Reifen bzw. in entsprechende Bereiche des zu vulkanisierenden Reifens vorgegeben werden kann.

Ferner ist es in bestimmten Anwendungsfällen von Vorteil, keramische Materialien mit anderen Materialien, zum Beispiel Metallen, Kunststoffen oder Legierungen zu kombinieren, wobei diese Kombination so gewählt werden kann, daß entweder bestimmte Materialien bestimmten Reifenbereichen zugeordnet sind oder unterschiedliche Materialien geschichtet verwendet werden, so daß im letzteren Falle in Radialrichtung unterschiedliche Materialien in der betreffenden Heizform aufeinanderfolgen.

Bei der Auswahl der Materialien für die Heizform werden neben allgemeinen konstruktiven Gesichtspunkten, die zumindest zum Teil herkömmlichen Kriterien des Heizformenbaus entsprechen können, insbesondere unter den Gesichtspunkten ausgewählt, daß die Heizform unter Mikrowellenbeaufschlagung die gewünschten Erwärmungseigenschaften aufweist und außerdem die geforderte Druckstabilität gewährleistet ist.

Ein zur Verwendung bei dem erfindungsgemäßen verfahren geeigneter Druckbehälter zur Reifenvulkanisation wird so ausgebildet, daß er einerseits eine geeignete Heizform enthält und andererseits eine zum Angriff an der Innenseite des Rohlings bestimmte Membran aufweist. Diese Membran wird während der Vulkanisation analog der konventionellen Reifenheizung gegen die Innenseite des Reifens gedrückt, wobei die Erzeugung des erforderlichen Druckes mittels eines vorzugsweise inerten Gases, insbesondere Stickstoff, erfolgt.

Dabei wird der Vorteil erzielt, daß unter Mikrowellenbeaufschlagung dieses inerte Gas zumindest im wesentlichen nicht erwärmt wird, wobei durch geeignete Wahl der typischen Mikrowellenparameter sichergestellt werden kann, daS praktisch keine Erwärmung des Gases oder nur eine definiert gewünschte Erwärmung des Gases auftritt. Bevorzugt wird das Gas nur zur Druckerzeugung und nicht dazu verwendet, indirekt über eine Gaserwärmung noch Wärmeenergie in den Reifen einzubringen. Die zur Reifenvulkanisation erforderliche Energie wird vielmehr direkt und gezielt über Mikrowellenenergie in den Reifen oder das aus Heizform, Reifen und Membran bestehende Gesamtsystem eingebracht.

Durch geeignete Wahl der Mikrowellenparameter sowie der Art der Einkoppelung ist es auch möglich, die Mikrowellenenergie direkt in eine konventionelle Reifenheizpresse einzubringen, wobei in der Regel die metallische Heizform als Mikrowellenreflektor oder als Mikrowellengefäß dient, was insbesondere bei Stickstoffheizung von Vorteil ist.

## Patentansprüche

1. Verfahren zur Herstellung von Fahrzeugluftreifen mit sich zwischen zwei Wulstringen erstreckender Karkasse und einem zwischen Karkasse und Lauffläche angeordneten Gürtel, wobei im Verlauf der unter Einwirkung von Wärme und Druck erfolgenden Vulkanisation und Formgebung zumindest ein Teil der erforderlichen Wärmeenergie in Form von Mikrowellenenergie in den Reifen eingebracht wird, und wobei die Mikrowellenstrahlung in eine als Reifenheizpresse dienende Heizform eingebracht wird, die als Mikrowellenreflektor oder als Mikrowellengefäß ausgebildet ist,
dadurch **gekennzeichnet,**
daß der jeweilige Reifenrohling unter ausschließlicher Verwendung von nichtmetallischen Bestandteilen aufgebaut wird, daß die Heizform aus bei Mikrowellenbeaufschlagung unterschiedliche Erwarmungseigenschaften aufweisenden Materialien aufgebaut ist, wobei die unterschiedlichen Materialbereiche der Heizform unterschiedlichen Reifenbereichen zugeordnet sind, und daß als Material für die Heizform zumindest zum Teil keramisches Material verwendet wird.

2. Verfahren nach Anspruch 1,
dadurch **gekennzeichnet**,
daß die Materialauswahl in der Weise erfolgt, daß sich die Heizform oder Bereiche der Heizform durch Mikrowellenbeaufschlagung nicht oder in vorgebbarer Weise erwärmen.

3. Verfahren nach Anspruch 1 oder 2,
dadurch **gekennzeichnet**,
daß die für die Heizform verwendeten keramischen Materialien mit anderen Materialien, insbesondere Stahl, Kunststoffen, Metallen oder Legierungen kombiniert werden.

4. Verfahren nach Anspruch 3,
dadurch **gekennzeichnet**,
daß ein aus zumindest zwei unterschiedlichen Materialien bestehender Schichtaufbau der Heizform vorgesehen wird.

5. Verfahren nach einem der vorhergehenden Ansprüche,
dadurch **gekennzeichnet**,
daß bei der Vulkanisation an die Innenseite des Rohlings eine Membran angedrückt wird, wobei der erforderliche Druck mittels eines inerten Gases, insbesondere Stickstoff, erzeugt wird.

## Claims

1. Method for the manufacture of pneumatic vehicle tyres comprising a carcass extending between two bead rings and a breaker arranged between carcass and tread, wherein at least part of the thermal energy required in the course of the vulcanisation and shaping, which takes place under the action of heat and pressure, is introduced into the tyre in the form of microwave energy, and wherein the microwave radiation is introduced into a heating mould which serves as a tyre heating press and which is in particular formed as a microwave reflector or as a microwave container, characterized in that the respective tyre blank is built up using exclusively non-metallic components, in that the heating mould is built up of materials having different heating up properties on being subjected to microwaves, when the different material regions of the heating mould are associated with different regions of the tyre, and in that ceramic material is used, at least partly, as the material for the heating mould.

2. Method in accordance with claim 1, characterised in that the material selection takes place in such a manner that the heating mould or regions of the heating mould do not heat up when subjected to microwaves, or heat up in a predeterminable manner.

3. Method in accordance with claim 1 or claim 2, characterised in that the ceramic materials which are used for the heating mould are combined with other materials, in particular steel, plastics, metals or alloys.

4. Method in accordance with claim 3, characterized in that a layered design of the heating mould is provided consisting of at least two different materials.

5. Method in accordance with one of the preceding claims, characterised in that during the vulcanisation a membrane is pressed onto the inner side of the blank, with the required pressure being generated by means of an inert gas, in particular nitrogen.

## Revendications

1. Procédé de fabrication de pneumatiques pour véhicules comportant une carcasse s'étendant entre deux talons annulaires et une ceinture disposée entre la carcasse et la surface de roulement, au moins une partie de l'énergie thermique indispensable étant apportée dans le pneumatique sous forme d'énergie provenant de micro-ondes au cours de la vulcanisation et de la mise en forme s'effectuant sous l'effet de chaleur et de pression ; et le rayonnement de micro-ondes étant introduit dans un moule de chauffage servant de presse de chauffage de pneumatiques, lequel moule a une configuration de réflecteur à micro-ondes ou d'enceinte à micro-ondes,
caractérisé en ce que
l'ébauche de pneumatique est réalisée en employant exclusivement des parties constitutives non métalliques, en ce que le moule de chauffage est constitué de matériaux présentant des propriétés d'échauffement différentes lorsqu'ils sont soumis à des micro-ondes, les zones de matériaux différentes du moule de chauffage étant affectées à des zones différentes du pneumatique, et en ce qu'en tant que matériau pour le moule de chauffage on utilise au moins partiellement un matériau céramique.

2. Procédé selon la revendication 1,
caractérisé en ce que
le choix des matériaux s'effectue de façon telle que le moule de chauffage, ou des zones du moule de chauffage ne s'échauffent pas en étant soumis à des micro-ondes, ou bien s'échauffent de manière susceptible d'être prescrite.

3. Procédé selon la revendication 1 ou 2,
caractérisé en ce que
les matériaux céramiques utilisés pour le moule de chauffage sont combinés avec d'autres matériaux, en particulier l'acier, des matières de synthèse, des métaux ou des alliages.

4. Procédé selon la revendication 3,
caractérisé en ce que
l'on prévoit une structure constituée de couches, comportant au moins deux matériaux différents.

5. Procédé selon l'une des revendications précédentes,
caractérisé en ce que
lors de la vulcanisation une membrane est appliquée par pression sur le côté intérieur de l'ébauche, la pression indispensable étant produite au moyen d'un gaz inerte, en particulier au moyen d'azote.
